# EUROPEAN PATENT SPECIFICATION

(11) **EP 0 458 773 B1**
(45) Date of publication and mention of the grant of the patent: **10.09.1997**
(21) Application number: 91870083.2
(22) Date of filing: 21.05.1991
(51) Int. Cl.: C08F 279/02

(54) **Monovinylaromatic polymer with improved environmental stress crack resistance**
Vinylaromatische Polymere mit verbesserter Spannungsrissbeständigkeit
Polymère monovinylaromatique ayant une meilleure résistance aux fissures de contraintes provoquées par l'environnement

(30) Priority: 21.05.1990 US 526276; 21.05.1990 US 526277
(43) Date of publication of application: 27.11.1991
(73) Proprietor: FINA TECHNOLOGY, INC., Dallas, Texas 75206 (US)
(72) Inventor: Sosa, Jose M., Deer Park, Texas (US); Menard, Kevin P., Euless, Texas (US)
(74) Representative: Leyder, Francis

(56) References cited:
- FR-A- 2 311 039
- GB-A- 1 078 007
- US-A- 3 243 481

## Description

### FIELD OF THE INVENTION

The present invention relates to thermoplastic compositions utilizing polymers of monovinylaromatic compounds which have been modified with rubber to increase their impact strength and which are particularly useful for manufacturing articles requiring increased environmental stress crack resistance (ESCR). More particularly, the present invention discloses a high impact polystyrene (HIPS) material which is particularly advantageous for use in food product containers which are normally subject to environmental stress cracking.

### BACKGROUND OF THE INVENTION

It is well known that rubber-reinforced polymers of monovinylidene aromatic compounds, such as styrene, alphamethyl styrene, and ring-substituted styrenes are desirable for a variety of uses. More particularly, rubber-reinforced polymers of styrene having included therein discrete particles of a cross-linked rubber, for example, polybutadiene, the discrete particles of rubber being dispersed throughout the styrene polymer matrix, can be used in a variety of applications including refrigerator linings, packaging applications, furniture, household appliances, and toys. The conventional term for such rubber-reinforced polymers is "High Impact Polystyrene" or "HIPS". The physical characteristics and mechanical properties of HIPS are dependent upon many factors, including the particle size of the cross-linked rubber particles. One of the most important characteristics of HIPS material is the ability of such material to resist environmental stress cracking. This ability must be coupled with a high impact strength in order to be desirable for use in articles such as food containers. In addition, other such properties which must be maintained for such articles include tensile strength and material gloss.

The property of stress-crack resistance, or environmental stress crack resistance ("ESCR"), is particularly important in thermoplastic polymers utilized in food containers. Articles made from styrene polymers modified to increase impact strength are prone to stress cracking when they come into contact with common agents found in organic food products such as fats and oils. Likewise, such products are also subject to stress cracking when coming into contact with organic blowing agents such as halohydrocarbons, containing fluorine and chlorine. These materials generally are found in household items such as refrigerator liners, which may crack when the cavities in the refrigerators are filled with a polyurethane foam as a result of the blowing agent utilized in the foam. In the past, environmental stress cracking has been prevented by complex procedures usually involving multiple layer polymer construction wherein an intermediate protective layer of polymer is placed between the polystyrene layer and the blowing agent or the fatty food materials. One such layer of material utilized to insulate the styrene from these agents is the material known as ABS, or acrylonitrile-butadiene-styrene. Other attempts to improve the stress crack resistance of high impact monovinylaromatic polymers has been to increase the amount of rubber mixed in the polymer. Unfortunately the higher rubber content only adds small increments of stress crack resistance. Other solutions have involved the use of tightly controlling process conditions to maintain strict control over particle size of the rubber particles cross-linked within the polystyrene matrix. One such patent disclosing this technique is that granted to the inventor of the present invention, US-A-4,777,210, issued October 11, 1988 in which a continuous flow process for producing high impact polystyrene and for providing reliable and reproducible methods for varying grain sizes was disclosed. In that patented process a preinversion reactor was utilized to convert a solution of styrene, polystyrene, rubber (such as polybutadiene), and a peroxide catalyst into a high impact polystyrene material exhibiting high environmental stress crack resistance.

Another attempt to improve stress crack resistance was that disclosed in US-A-4,144,204 to Mittnacht, et al., dated March 13, 1979 in which a monovinylaromatic compound was modified with rubber to increase the ESCR and wherein the amount of rubber dissolved in the monomer prior to polymerization was chosen so that the content of the soft component in the impact resistant polymer was at least 28% by weight and preferably 38% by weight or more, based on the weight of the impact resistance polymer. The upper limit of the content of soft component was about 50 to 60% by weight and a preferable range of 30 to 40% by weight was found advantageous.

Another attempt to improve the stress crack resistance of HIPS material can be found in British patent No. GB 2,153,370A, wherein a HIPS material was manufactured utilizing a high molecular weight material having a stated molecular mass of at least 300,000, a viscosity greater than or equal to 140 centipoise, containing between 7 and 10% by weight of rubber, and the polymerization being carried out in the presence of alphamethyl styrene dimer or a compound chosen from n-dodecylmercaptan, tertiary dodecylmercaptan, diphenyl 1,3 butadiene, or various other compounds or mixtures thereof. Also, this process was carried out in the presence of cyclohexane and ethylbenzene equal to at least 7% by weight of the total ingredients. In addition, additives including monotriglycerides of stearates from polyethylene waxes were also necessary.

### SUMMARY OF THE INVENTION

The present invention overcomes the disadvantages of the known high impact polystyrene materials by providing a polystyrene material blended with a high molecular weight rubber requiring no additional additives or lubricants. The high impact polystyrene disclosed by the present invention demonstrates a high resistance to environmental stress crack resistance, high impact strength, good tensile strength, and good gloss.

### DETAILED DESCRIPTION OF THE PREFERRED EMBODIMENTS

The present invention discloses a thermoplastic composition containing a polymer of a monovinylaromatic compound which has been modified with a rubber to increase its impact strength and environmental stress crack resistance, which compound was obtained by polymerizing the monovinylaromatic material in the presence of the rubber. In this composition the proportion of the soft component in the polymer, which has been modified to increase the impact strength, is less than 27% by weight based on the polymer, the soft component being defined as the toluene-insoluble constituent of the polymer which has been modified to increase its impact strength, minus any pigment which may be present. The particular rubber utilized in the present invention should be of a high molecular weight and preferably is of the type sold by Firestone and designated as Firestone 7345 or "Diene 70" having a Mooney viscosity of approximately 70, a numerical molecular weight of about 146,000, a weight average molecular weight of about 337,000, and a Z molecular weight of about 630,000 as measured by the gel permeation technique.

The high impact polymers may be manufactured in accordance with any conventional process, provided the constituents mentioned hereinabove are utilized. Normal manufacturing processes include mass polymerization and solution polymerization such as that disclosed in US-A-2,694,692 or mass suspension polymerization such as that disclosed in US-A-2,862,906. Other processes of manufacture may also be used, provided the processes are capable of utilizing the constituents mentioned herein.

Suitable monovinylaromatic compounds utilizing the present invention include styrene as well as styrenes alkylated in the nucleus or side-chain such as alphamethylstyrene and vinyltoluene. The monvinyl-aromatic compounds may be employed singly or as mixtures. In one preferred embodiment, styrene was the monovinylaromatic compound of preference. The high impact polystyrene manufactured according to the present invention is formed by polymerizing the monovinylaromatic compound in the presence of the Diene 70 rubber. The polymerization is carried out in a conventional manner by mass polymerization, solution polymerization, or polymerization in aqueous dispersion, the rubber first being dissolved in the polymerizable monomer and this solution then being subjected to polymerization. When using solution polymerization, the starting solution may be mixed with up to 50% by weight based on the monovinylaromatic compound employed of an inert diluent. Preferred inert diluents include aromatic hydrocarbons or mixtures of aromatic hydrocarbons such as toluene, ethylbenzene, xylenes, or mixtures of these compounds.

The present invention may also be utilized in a continuous flow process for producing polystyrene utilizing a pre-inversion reactor in which a solution of styrene, polystyrene, and rubber are mixed prior to being introduced into a second stirred tank reactor. The viscosity of the solutions in the pre-inversion and in the second stirred tank reactor are closely controlled to produce desirable HIPS. The particular process for manufacturing the preferred embodiment may be found in US-A-4,777,210, to Sosa, et al., dated October 11, 1988.

In a first embodiment of the invention, a mixture of conventional rubber having a molecular weight corresponding to a Mooney viscosity of approximately 50 was blended with a special rubber having a molecular weight corresponding to a Mooney viscosity of about 70 which was then processed into a high impact polystyrene material by the above-mentioned patented process. The finished product was then tested for environmental stress crack resistance, impact resistance, and gloss and the results appear in Table I hereinbelow. The particular rubber materials utilized were "Diene 55" a material manufactured by Firestone Tire and Rubber Company and designated as 7025, and "Diene 70", also manufactured by Firestone Tire and Rubber Company and designated as 7345. Both of these rubbers are of the polybutadiene type. It can be seen from Table I that the conventional rubber, "Diene 55", modified high impact polystyrene exhibits a much lower ESCR than the HIPS material manufactured from the blend of the Diene 70 material with the Diene 55 rubber.

For example, sample "A" represents a conventional HIPS material of straight 55 viscosity rubber at 6.6% by weight. The ESCR values are 36 and 3 for this material. Sample "B" is a HIPS material manufactured with slightly less rubber (6.5%) but at the higher viscosity (60). The resulting ESCR values for the higher viscosity material are significantly higher: 49 and 6. By increasing the rubber content to 7.6% by weight as in Sample "C" the ESCR values of the 60 Vis material are increased to 61 and 11; and a rubber level of 8.1% of the 60 Vis rubber results in ESCR values of 66 and 14.

In a second preferred embodiment of the present invention, a high impact polystyrene material was made utilizing styrene monomer and a higher molecular weight rubber exhibiting a Mooney viscosity in the range of approximately 90. This HIPS material exhibited even greater environmental stress crack resistance than that utilizing the blended polybutadiene rubbers. In the present embodiment, however, because of the high molecular weight of the 90 Mooney polybutadiene, blending of the rubber and processing of the HIPS material would not have been possible had not the rubber been modified by extending it with oil. In this embodiment, the 90 viscosity high molecular weight polybutadiene was processed utilizing FDA-approved food-grade mineral oil to extend the polybutadiene and allow it to be processed. This is particularly advantageous because of the gains in ESCR as well as the fact that the FDA-approved mineral oil can be utilized in food containers such as butter cartons and similar type products. Furthermore, the use of FDA-approved mineral oil is advantageous in that these types of extenders would normally be utilized in processing polystyrene anyway and by utilizing the oil to extend the high molecular weight polybutadiene, rather than in the polystyrene itself, additional gains in molecular weight in the polybutadiene can be achieved without degrading the quality of the HIPS which results. The results of this second embodiment can be found in Table II located hereinbelow. It can be seen that a significant improvement in ESCR is obtained utilizing the 90 Mooney polybutadiene over the 52 Mooney polybutadiene. In this embodiment the HIPS material was manufactured according to the process set forth in the patent mentioned hereinabove. In addition, the oil-extended polybutadiene having a 90 Mooney viscosity was processed utilizing 15-20% mineral oil, by weight of the polybutadiene, prior to its incorporation the HIPS material through the process mentioned above. One particularly useful mineral oil is Britol (trademark), a white mineral oil manufactured by Petroleum Specialties International, Inc., of Perth Amboy, New Jersey. This oil-extended polybutadiene resulted in a HIPS material exhibiting a significant increase in the ESCR and acceptable levels of impact strength and gloss as illustrated in the following Table II.

Table III, also set forth hereinbelow, shows the relationship of the numerical average molecular weight, the weight average molecular weight and the Z molecular weight for the polybutadiene materials utilized in the HIPS manufactured according to the present invention. Applicants have found that by utilizing a higher molecular weight rubber with gels below about 27%, improved ESCR properties can be obtained in the high impact polystyrene without loss of color or impact strength. In addition to utilizing a 60 Mooney viscosity blended polybutadiene in the HIPS material, it has also been found advantageous to go as high as a 90 Mooney viscosity extended polybutadiene by extending the rubber with FDA-approved mineral oil to improve processing and allow use of a much higher molecular weight rubber in the HIPS formulation.

Thus, the present invention discloses the use of a high molecular weight rubber as indicated by a Mooney viscosity and more particularly, a high molecular weight polybutadiene rubber with Mooney viscosities exceeding about 50, useful in preparing high impact polystyrene material utilizing gel levels below about 27% and exhibiting higher environmental stress crack resistance values than previously found in conventional HIPS manufacturing techniques. In addition, the present invention discloses the use of even higher molecular weight polybutadiene rubbers for manufacturing HIPS with gel levels below about 27% utilizing high Mooney viscosity rubbers which have been oil-extended by the use of FDA-approved mineral oil and which do not degrade the quality of the finished products such as food containers. While white mineral oils have been found useful in the present invention, other FDA-approved lubricants for incidental food contact could also be utilized to extend the high-viscosity rubber.

**TABLE I**

| SAMPLE | *RUBBER VIS. | %RUBBER | **ESCR % TENS. | **ESCR % ELONG. |
|---|---|---|---|---|
| A. | 55 | 6.6 | 36 | 3 |
| B. | 60 | 6.5 | 49 | 6 |
| C. | 60 | 7.6 | 61 | 11 |
| D. | 60 | 8.1 | 66 | 14 |

| | | | | |
|---|---|---|---|---|
| *Rubber Vis is Mooney viscosity. The Mooney is adjusted by blending different rubbers of 55 and 70 Vis. | | | | |
| **Two ESCR tests have been used: one is described in US-A-4,777,210 and is based on % elongation at break of samples exposed to margarine. The other test, % tensile retained, is run on 0.762.10⁻³ m (30 Mil) sheet samples. Samples are exposed to margarine at room temperature for one hour. The % tensile retained is obtained by dividing the tensile strength of exposed samples by that of the unexposed samples. | | | | |

The following criteria was used to pass or fail materials.

| PASS/FAIL CRITERIA | % TENS. RETAINED | % ELONG. @ BREAK |
|---|---|---|
| Poor | < 40 | < 3 |
| Fair | 40-50 | 4-6 |
| Good | 50-60 | 8-12 |
| Excellent | 80-100 | 14-20 |

**TABLE II**

| Rubber | SR 7025 | 7342 |
|---|---|---|
| Level | 9% | 9% |
| Viscosity (Mooney) | 52 | 91 |
| Falling Dart. | 116 | 94 |
| Gloss | 58 | 48 |
| % Gels | 24 | 25-27 |
| Grafting | 160 | 168 |
| Particle Size (Visual) | 4-6 | 8-12 |
| Elongation | 56 | 50 |
| ESCR: 2 minutes | 37 | 54 |
| 30 minutes | 14 | 18 |
| freon | - | 51 |

**TABLE III**

| (Molecular Weights) | | | |
|---|---|---|---|
| | 7025 | 7345 | 7342 |
| Mn | 124,000 | 146,000 | 176,000 |
| Mw | 270,000 | 337,000 | 449,000 |
| Mz | 507,000 | 630,000 | 929,000 |

When referring to the "gel" level or "gel" content of the HIPS material, it is intended that this term represent the disperse phase contained in the continuous polymerized monovinylaromatic compound phase. The disperse phase, or gel, consists essentially of particles of graft copolymers of the polybutadiene rubber and polymerized monovinylaromatic compound, plus mechanically occluded particles of the polymerized monovinyl-aromatic compound located in the rubber particles. Gel level may be measured as the toluene-insoluble component of the rubber-modified high-impact compound. Gel levels are indicated in weight percents.

When referring to monovinylaromatic monomer or compound, it is intended that this include styrenes, alphamethyl styrene, and ring-substituted styrenes. When referring to rubber it is intended that such phrase refer to natural rubber, polybutadiene, polyisoprene, and copolymers of butadiene and/or isoprene with styrene.

ESCR values are determined according to the procedures set forth in US-A-4,777,210, at columns 10 and 11 thereof.

Mooney viscosity is determined using the procedures set forth at pages 109 and 110 of RUBBER TECHNOLOGY, Third Edition, a publication sponsored by the Rubber Division of the American Chemical Society, and published by Van Nostrand Reinhold Compagny of New York.

## Claims

1. A high-impact monovinylaromatic polymeric composition consisting essentially of an impact-resistant rubber-modified polymer having improved environmental stress-crack resistance, said polymer formed by the polymerization of the monovinylaromatic compound is in the presence of the rubber and in which the gel content by weight of said resulting composition is between 20% and 27%, and the rubber utilized consists essentially of a blend of a first rubber having a Mooney viscosity of 50, and a second rubber having a Mooney viscosity of 70.

2. The composition of claim 1 wherein said first and second rubbers each consist essentially of polybutadiene.

3. The composition of either of claims 1 and 2 wherein said first rubber comprises from 10 to 90% of said blend and said second rubber comprises from 90 to 10% of said blend.

4. The composition of claim 3 wherein said first rubber comprises from 10 to 75% of said blend and said second rubber comprises from 25 to 90% of said blend.

5. The composition of any one of claims 1 to 4 wherein said monovinylaromatic compound is selected from the group consisting of styrene, alphamethyl styrene, and ring-substituted styrenes.

6. A thermoplastic composition particularly suitable for manufacturing food containers for packaging oily and fatty foods, said composition characterized by high impact strength and high environmental stress crack resistance, and comprising :
a polymer formed by the polymerization of a monovinylaromatic compound in the presence of a high molecular weight oil-extended rubber having a Mooney viscosity of 90, said rubber being extended with a food-grade oil
and wherein the rubber component in said composition is maintained at a level sufficient to provide a gel content of 20 to 27 percent by weight of the composition.

7. A process for producing a high-impact polymerized monovinylaromatic compound having improved environmental stress crack resistance comprising:
polymerizing a mixture of a monovinylaromatic monomer and rubber, said monovinylaromatic monomer being selected from the group consisting of styrene, alphamethyl styrene, and ring-substituted styrenes, and said rubber being selected from the group consisting of polybutadiene, polyisoprene, copolymers of butadiene and/or isoprene with styrene, and natural rubber; wherein the rubber content of said compound is maintained at a level sufficient to result in a gel content in the final composition of 20 to 27 percent by weight, and wherein said rubber is a blend of a first rubber having a Mooney viscosity of 50 and of a second rubber having a Mooney viscosity of 70.

8. The process of claim 7 wherein the monovinylaromatic monomer is styrene, and the first and second rubbers are polybutadiene.

9. The process of claim 8 wherein the first polybutadiene comprises from 2 percent to 5 percent of the total rubber utilized, and said second polybutadiene comprises the remainder.

10. A process for producing a high-impact polymerized monovinylaromatic compound having improved environmental stress crack resistance comprising :
polymerizing a mixture of a monovinylaromatic monomer and rubber, said monovinylaromatic monomer being selected from the group consisting of styrene, alphamethyl styrene, and ring-substituted styrenes, and said rubber being selected from the group consisting of polybutadiene, polyisoprene, copolymers of butadiene and/or isoprene with styrene, and natural rubber; wherein the rubber content of said compound is maintained at a level sufficient to result in a gel content in the final composition of about 20 to 27 percent by weight, and wherein said rubber has a Mooney viscosity of 90 and is an oil-extended rubber which has been extended with a food-grade mineral oil.

11. A process of claim 10 wherein the monovinylaromatic monomer is styrene.

12. The process of claim 10 or 11 wherein said rubber level is 9 percent by weight.

## Patentansprüche

1. Hochschlagzähe monovinylaromatische Polymerzusammensetzung, die im wesentlichen aus einem schlagzähen mit Kautschuk modifizierten Polymer besteht, das eine verbesserte Beständigkeit gegen umgebungsbedingte Spannungsrißbildung aufweist, wobei das durch Polymerisation der monovinylaromatischen Verbindung hergestellte Polymer in Gegenwart des Kautschuks vorliegt und wobei der auf das Gewicht bezogene Gelgehalt der entstandenen Zusammensetzung zwischen 20 und 27% beträgt, und der verwendete Kautschuk im wesentlichen aus einem Gemisch aus einem ersten Kautschuk mit einer Mooney-Viskosität von 50 und einem zweiten Kautschuk mit einer Mooney-Viskosität von 70 besteht.

2. Zusammensetzung nach Anspruch 1, worin der erste und zweite Kautschuk jeweils im wesentlichen aus Polybutadien besteht.

3. Zusammensetzung nach einem der Ansprüche 1 und 2, worin der erste Kautschuk 10 bis 90% des Gemisches und der zweite Kautschuk 90 bis 10% des Gemisches umfaßt.

4. Zusammensetzung nach Anspruch 3, worin der erste Kautschuk 10 bis 75% des Gemisches und der zweite Kautschuk 25 bis 90% des Gemisches umfaßt.

5. Zusammensetzung nach einem der Ansprüche 1 bis 4, worin die monovinylaromatische Verbindung aus der Gruppe ausgewählt wird, die aus Styrol, α-Methylstyrol und ringsubstituierten Styrolen besteht.

6. Thermoplastische Zusammensetzung, die insbesondere zur Herstellung von Nahrungsmittelbehältern zum Verpacken von öligen und fettigen Nahrungsmitteln geeignet ist, wobei die Zusammensetzung durch eine hohe Schlagzähigkeit und eine hohe Beständigkeit gegen umgebungsbedingte Spannungsrißbildung gekennzeichnet ist, und umfaßt:
ein durch die Polymerisation einer monovinylaromatischen Verbindung in der Gegenwart eines mit Öl gestreckten Kautschuks mit einem hohen Molekulargewicht, der eine Mooney-Viskosität von 90 aufweist, hergestelltes Polymer, wobei der Kautschuk mit einem als Nahrungsmittel geeigneten Öl gestreckt worden ist, und
worin die Kautschukkomponente in der Zusammensetzung auf einem Wert gehalten wird, der zur Bereitstellung eines Gelgehalts von 20 bis 27 Gew.-%, bezogen auf die Zusammensetzung, ausreicht.

7. Verfahren zur Herstellung einer hochschlagzähen monovinylaromatischen Polymerverbindung mit einer verbesserten Beständigkeit gegen umgebungsbedingte Spannungsrißbildung, umfassend:
Polymerisieren eines Gemisches aus einem monovinylaromatischen Monomer und Kautschuk, wobei das monovinylaromatische Monomer aus der Gruppe ausgewählt wird, die aus Styrol, α-Methylstyrol und ringsubstituierten Styrolen besteht, und der Kautschuk aus der Gruppe ausgewählt wird, die aus Polybutadien, Polyisopren, Copolymeren von Butadien und/oder Isopren mit Styrol und natürlichem Kautschuk besteht; worin der Kautschukgehalt der Verbindung auf einem Wert gehalten wird, der dazu ausreicht, daß in der Endzusammensetzung ein Gelgehalt von 20 bis 27 Gew.-% resultiert, und worin der Kautschuk ein Gemisch eines ersten Kautschuks mit einer Mooney-Viskosität von 50 und eines zweiten Kautschuks mit einer Mooney-Viskosität von 70 ist.

8. Verfahren nach Anspruch 7, worin das monovinylaromatische Monomer Styrol ist und der erste und zweite Kautschuk Polybutadien ist.

9. Verfahren nach Anspruch 8, worin das erste Polybutadien 2 bis 5% der Gesamtmenge an verwendetem Kautschuk umfaßt, und worin das zweite Polybutadien den Rest umfaßt.

10. Verfahren zur Herstellung einer hochschlagzähen monovinylaromatischen Polymerverbindung mit einer verbesserten Beständigkeit gegen umgebungsbedingte Spannungsrißbildung, umfassend:
Polymerisieren eines Gemisches eines monovinylaromatischen Monomers und eines Kautschuks, wobei das monovinylaromatische Monomer aus der Gruppe ausgewählt wird, die aus Styrol, α-Methylstyrol und ringsubstituierten Styrolen besteht, und wobei der Kautschuk aus der Gruppe ausgewählt wird, die aus Polybutadien, Polyisopren, Copolymeren von Butadien und/oder Isopren mit Styrol und natürlichem Kautschuk besteht; worin der Kautschukgehalt der Verbindung auf einem Wert gehalten wird, der zum Erzielen eines Gelgehalts in der Endzusammensetzung von etwa 20 bis 27 Gew.-% ausreicht, und worin der Kautschuk eine Mooney-Viskosität von 90 aufweist und ein mit Öl gestreckter Kautschuk ist, der mit einem als Nahrungsmittel geeigneten Mineralöl gestreckt worden ist.

11. Verfahren nach Anspruch 10, worin das monovinylaromatische Monomer Styrol ist.

12. Verfahren nach Anspruch 10 oder 11, worin die Kautschukkonzentration 9 Gew.-% beträgt.

## Revendications

1. Une composition de polymère monovinylaromatique à résistance aux chocs élevée consistant essentiellement en un polymère modifié par du caoutchouc résistant aux chocs ayant une résistance améliorée aux fissures de contraintes dues à l'environnement, ce polymère formé par la polymérisation du composé monovinylaromatique est en présence de caoutchouc et dans lequel la teneur en gel en poids de la composition résultante est entre 20 et 27% et le caoutchouc utilisé consiste essentiellement en un mélange d'un premier caoutchouc ayant une viscosité Mooney de 50, et un second caoutchouc ayant une viscosité Mooney de 70.

2. La composition selon la revendication 1 dans laquelle lesdits premier et second caoutchoucs consistent chacun essentiellement en polybutadiène.

3. La composition selon l'une quelconque des revendications 1 et 2 dans laquelle ce premier caoutchouc comprend de 10 à 90% de ce mélange et ce second caoutchouc comprend de 90 à 10% de ce mélange.

4. La composition de la revendication 3 dans laquelle ce premier caoutchouc comprend de 10 à 75% de ce mélange et ce second caoutchouc comprend de 25 à 90% de ce mélange.

5. La composition selon l'une quelconque des revendications 1 à 4 dans laquelle ce composé monovinylaromatique est choisi dans le groupe consistant en styrène, alphaméthylstyrène, et des styrènes substitués sur l'anneau.

6. Une composition thermoplastique particulièrement adéquate pour la fabrication de conteneurs pour produits alimentaires pour emballer des produits alimentaires gras et huileux, cette composition étant caractérisée par une résistance au chocs élevée et une résistance aux fissures de contraintes provoquées par l'environnement élevée et comprenant:
un polymère formé par la polymérisation d'un composé monovinylaromatique en présence d'un caoutchouc à poids moléculaire élevé allongé par de l'huile, ayant une viscosité Mooney de 90, ce caoutchouc étant allongé par une huile de qualité alimentaire
et dans lequel le composant de caoutchouc dans cette composition est maintenu à un niveau suffisant pour fournir une teneur en gel de 20 à 27% en poids de la composition.

7. Un procédé pour produire un composé monovinylaromatique polymérisé à résistance aux chocs élevée ayant une résistance aux fissures de contraintes dues à l'environnement améliorée comprenant:
la polymérisation d'un mélange de monomère monovinylaromatique et de caoutchouc, ce monomère monovinylaromatique étant choisi dans le groupe consistant en styrène, alphaméthylstyrène et styrènes substitués sur l'anneau, et ce caoutchouc étant choisi dans le groupe consistant en polybutadiène, polyisoprène, des copolymères de butadiène et/ou d'isoprène avec du styrène, et du caoutchouc naturel; où la teneur en caoutchouc de ce composé est maintenue à un niveau suffisant pour résulter en une teneur en gel dans la composition finale de 20 à 27% en poids, et où ce caoutchouc est un mélange d'un premier caoutchouc ayant une viscosité Mooney de 50 et d'un second caoutchouc ayant une viscosité Mooney de 70.

8. Le procédé selon la revendication 7 dans lequel le monomère monovinylaromatique est le styrène, et les premier et second caoutchoucs sont du polybutadiène.

9. Le procédé selon la revendication 8 dans lequel le premier polybutadiène comprend de 2% à 5% du caoutchouc total utilisé et ce second polybutadiène comprend le reste.

10. Un procédé pour produire un composé monovinylaromatique polymérisé à résistance aux chocs élevée ayant une résistance aux fissures de contraintes provoquées par l'environnement améliorée comprenant:
la polymérisation d'un mélange de monomère monovinylaromatique et de caoutchouc, ce monomère monovinylaromatique étant choisi dans le groupe consistant en styrène, alphaméthylstyrène et styrènes substitués sur l'anneau, et ce caoutchouc étant choisi dans le groupe consistant en polybutadiène, polyisoprène, et copolymères de butadiène et/ou d'isoprène avec du styrène, et du caoutchouc naturel; où la teneur en caoutchouc de ce composé est maintenue à un niveau suffisant pour résulter en une teneur en gel dans la composition finale d'environ 20 à 27% en poids, et où ce caoutchouc a une viscosité Mooney de 90 et est un caoutchouc allongé par de l'huile qui a été allongé avec une huile minérale de qualité alimentaire.

11. Un procédé selon la revendication 10 dans lequel le monomère monovinylaromatique est le styrène.

12. Le procédé selon les revendications 10 ou 11 dans lequel le niveau de caoutchouc est 9% en poids.
